# DEMANDE DE BREVET EUROPEEN

(11) **EP 2 954 784 A1**
(43) Date de publication de la demande: **16.12.2015**
(21) Numéro de dépôt: 15170006.9
(22) Date de dépôt: 30.05.2015
(51) Int. Cl.: A23L 1/064

(54) **PROCEDE DE PREPARATION D'UNE CONSERVE DE FRUITS TARTINABLE**

(30) Priorité: 13.06.2014 FR 1455373
(71) Demandeur: Krencker, Fabrice, 68420 Ranrupt (FR)
(72) Inventeur: Krencker, Fabrice, 68420 Ranrupt (FR)
(74) Mandataire: Hege, Frédéric

(57) **Abrégé**

La présente invention concerne un procédé de préparation d'une conserve de fruits tartinable, en particulier une confiture, comportant les étapes suivantes :
- mélange d'une base de fruits avec une quantité prédéterminée de sucre, pour obtenir une masse sucrée,
- maintien de la masse sucrée à température et pression ambiantes de sorte à produire une évaporation d'une partie de l'eau contenue dans le mélange jusqu'à ce que la teneur résiduelle en matières sèches atteigne une valeur cible au moins égale à 60%.

La présente invention concerne encore un dispositif spécialement conçu pour mettre en oeuvre un procédé selon l'invention, caractérisé en ce qu'il comporte un plateau (2) apte à recevoir une masse sucrée (3) étalée, une balance (1) apte à mesurer la masse de la masse sucrée, et un module logique apte à déclencher une alarme lorsque la valeur de la masse sucrée atteint une valeur cible.

## Description

La présente invention concerne un procédé de fabrication d'une conserve de fruits tartinable telle qu'une confiture par exemple.

Le procédé habituel pour fabriquer une conserve de fruits tartinable et en particulier une confiture consiste à préparer des fruits (dénoyautage, équeutage, lavage, ...) pour obtenir une base de fruits, mélanger cette base de fruits avec une quantité prédéterminée de sucre pour obtenir ce qu'on peut appeler la masse sucrée, puis de faire bouillir cette masse sucrée pendant une durée prédéterminée, fonction du fruit choisi et éventuellement du mode de préparation retenu des fruits, tel que mixage ou extraction du jus pour en faire une gelée.

Toutefois ce procédé connu présente en particulier l'inconvénient de faire perdre une part significative du goût du fruit, et de détruire une partie significative des vitamines C contenues dans les fruits. En outre il arrive qu'on arrête la cuisson trop tôt, et la confiture obtenue est trop liquide, ou alors trop tard, et elle devient trop difficile à tartiner.

Le document CN1020 90555 divulgue un procédé de fabrication de conserves de fruits comprenant une étape de maintien à une température négative, de préférence inférieure à -14°C. Ce document divulgue un effet bénéfique de ce procédé, par rapport à un procédé à cuisson, sur le goût, la couleur et l'odeur de la conserve obtenue.

Le document EP0 301 956 divulgue un procédé de fabrication de conserves de fruits, en particulier de jus de fruits, comprenant une étape de traitement à 1,5 bar sous azote, en vue de réduire la pression en oxygène. Ce document divulgue un effet bénéfique de ce procédé, par rapport à un procédé à cuisson, sur le goût de la conserve obtenue.

Le document EP0 429 966 divulgue un procédé de fabrication de conserves de fruits, et en particulier de confitures, dans lequel l'étape de cuisson est remplacée par une étape de maintien à haute pression, de plusieurs milliers de bars pendant quelques minutes, typiquement 15 minutes. Ce document divulgue un effet bénéfique de ce procédé, par rapport à un procédé à cuisson, sur le goût de la conserve obtenue.

Néanmoins ces divers procédés présentent d'importants inconvénients, puisque tous ces procédés nécessitent une installation complexe sans laquelle ils ne peuvent pas être mis en oeuvre. Par ailleurs, la conservation des vitamines C reste faible, aucun de ces documents n'apporte de solution permettant de conserver les vitamines C du fruit récolté lors du traitement.

La présente invention a pour but de pallier au moins en partie à ces inconvénients.

Un objet de la présente invention est de proposer un procédé de conserve de fruits tartinable qui soit facile à mettre en oeuvre d'une part, et/ou facile à réussir d'autre part.

Un autre objet de la présente invention est de proposer un procédé de fabrication de conserve de fruits qui permette de conserver le plus possible le goût, et/ou la couleur, et/ou la consistance, et/ou la teneur en vitamine C du fruit récolté.

Un autre objet enfin de la présente invention est de proposer un procédé de fabrication d'une conserve de fruits tartinable qui soit écologique, et économe en consommation d'énergie.

Dans une première démarche inventive, l'inventeur a réalisé plusieurs centaines d'essais, avec des bases de fruits très variées, de réalisation d'une conserve de fruits sans apport d'énergie, ni pour un chauffage, ni pour un refroidissement, ni pour une montée en pression, mais simplement en laissant s'évaporer naturellement l'eau de la masse sucrée, jusqu'à obtention d'une valeur cible de taux de matières sèches, ce taux étant mesuré par exemple par réfractométrie. Une confiture obtenue de cette manière pourrait s'appeler une crufiture, par jeu sur le terme « cru », indiquant que cette « crufiture » n'est pas cuite, qu'on n'a pas détruit les germes ni par chauffage, ni par surgélation, ni par haute pression.

Il s'est d'abord aperçu que la fin du processus de fabrication de la confiture correspondait toujours au même taux final de matières sèches. Ceci permet de surveiller le processus par une pesée continue, le taux de matières sèches d'une masse sucrée donnée étant lié de manière univoque à sa masse.

La présente invention propose donc un procédé de préparation d'une conserve de fruits tartinable, en particulier d'une confiture, comportant les étapes suivantes :
- mélange d'une base de fruits avec une quantité prédéterminée de sucre, pour obtenir une masse sucrée,
- maintien de la masse sucrée à température et pression ambiantes de sorte à produire une évaporation d'une partie de l'eau contenue dans le mélange jusqu'à ce que la teneur résiduelle en matières sèches atteigne une valeur cible au moins égale à 60%.

Un tel procédé présente l'avantage de permettre un meilleur maintien du goût du fruit et de la teneur en vitamine C, grâce à l'absence de cuisson ; par ailleurs le critère d'une valeur cible en taux de matières sèches permet de garantir l'obtention d'un produit ajusté à une bonne consistance.

L'inventeur s'est toutefois aperçu que dans beaucoup de cas, le produit obtenu ne se conservait pas, en l'occurrence il commençait à pourrir, moisir, fermenter ou cristalliser dans les semaines suivant sa fabrication. L'inventeur a alors eu l'idée de mesurer l'activité de l'eau, souvent symbolisée Aw, des produits obtenus, à l'aide d'un Aw mètre. Et il s'est aperçu que les confitures qui pourrissaient, ou se dégradaient d'une autre manière, avaient une activité de l'eau supérieure à 0,8, et qu'au contraire celles qui se conservaient plus longtemps avaient une activité de l'eau inférieure à 0,8.

L'activité de l'eau d'un produit humide est définie par la pression de vapeur d'eau de ce produit divisée par la pression de vapeur saturante à la même température. L'inventeur a ainsi mis en évidence que ce paramètre permet de prévoir si une conserve de fruits tartinable va se conserver pendant plusieurs mois, ou non.

Selon un mode avantageux de réalisation de l'invention, il est proposé de poursuivre l'étape de maintien jusqu'à ce que l'activité de l'eau soit inférieure à 0,8.

Grâce à ces dispositions, on obtient une conserve de fruits tartinable, et en particulier une confiture, sans apport d'énergie, et donc de manière parfaitement écologique, et de plus qui se conserve à température ambiante, sans nécessiter une conservation au réfrigérateur, donc là encore sans aucun apport d'énergie.

Selon d'autres caractéristiques
- l'étape de maintien peut s'effectuer à une température toujours inférieure à 45°C, et préférence à 32°C, de préférence à 25°C ; en effet l'inventeur s'est aperçu qu'avec des températures inférieures à 45°C le goût et le taux de vitamine C des fruits est nettement meilleur qu'avec les procédés traditionnels de fabrication d'une confiture ; en restant en dessous de 32°C on perçoit une identité de goût entre le fruit frais et la confiture ; les essais habituels sont effectués à 25°C et donnent de très bons résultats,
- la valeur cible de la teneur résiduelle en sucre est au moins égale à 65% ; en effet cela donne au produit une perception gustative mieux appréciée par les consommateurs.

Dans une deuxième démarche inventive, l'inventeur a cherché à préciser les conditions dans lesquelles on arrive à obtenir une activité de l'eau inférieure à 0,8 sans pour autant atteindre des teneurs résiduelles en matières sèches trop élevées. En effet au-delà de 72% de taux de matières sèches, les confitures cristallisent par saturation, et deviennent difficiles à tartiner, et sont moins appréciées des consommateurs.

Il s'est alors aperçu que pour certains fruits, comme les myrtilles sauvages, on arrive en dessous de 0,8 d'activité de l'eau dès 66% de taux de matières sèches.

Il s'est aperçu également qu'en utilisant au moins 50% de fructose dans le sucre ajouté à la base de fruits pour obtenir la masse sucrée, on obtient une activité de l'eau inférieur à 0,8 dès des taux de matières sèches de 65 à 68% pour tous les fruits.

Il s'est aperçu enfin qu'en ajoutant un acidifiant à la base de fruits, par exemple un concentré de citron à pH 1,9, on facilitait nettement l'obtention d'une activité de l'eau inférieure à 0,8 pour des taux de matières sèches acceptables.

La présente invention propose donc également un procédé de fabrication de conserve de fruits tel que celui proposé ci-dessus, mais avec les caractéristiques complémentaires suivantes :
- ledit sucre peut consister au moins pour moitié en du fructose, permettant d'obtenir le résultat escompté quelque soit le fruit choisi,
- avant l'étape de mélange, on peut ajouter à la base de fruits un acidifiant, par exemple un concentré de citron, de sorte à abaisser le pH de la base de fruits en dessous de 3,5, permettant ainsi d'obtenir le résultat escompté plus facilement.

La présente invention concerne encore un dispositif spécialement conçu pour mettre en oeuvre un procédé selon l'invention. Ce dispositif est particulier en ce qu'il comporte un plateau apte à recevoir une masse sucrée étalée, une balance apte à mesurer la masse de la masse sucrée, et un module logique apte à déclencher une alarme lorsque la valeur de la masse sucrée atteint une valeur cible.

Selon un mode avantageux de réalisation de l'invention, ledit dispositif peut comprendre en outre une moustiquaire, disposée de sorte à protéger la masse sucrée des insectes, permettant ainsi une utilisation en plein air, pour bénéficier du vent et ainsi accélérer le processus d'évaporation.

L'avantage apporté par la présente invention réside principalement en ce qu'il devient possible d'obtenir une conserve de fruit tartinable de façon parfaitement écologique, et en conservant la qualité du fruit de manière bien meilleure qu'avec le procédé habituel de cuisson. Selon des modes avantageux de réalisation de l'invention, on peut aussi contrôler le processus par une simple pesée, sans avoir besoin de mesurer l'activité de l'eau.

La présente invention sera mieux comprise à la lecture de la description détaillée qui suit faite en référence à la figure annexée.

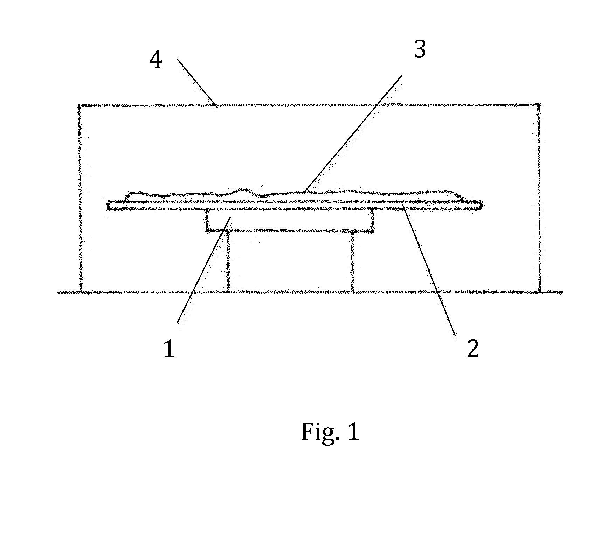

- La figure 1 est une vue schématique d'un dispositif spécialement conçu pour mettre en oeuvre le procédé selon l'invention.

Dans la mise en oeuvre de la méthode selon l'invention, il y a parfois lieu d'ajouter une étape de préparation des fruits, dénoyautage, épluchage, équeutage, épépinage), étape nécessaire pour certains fruits et appelée parage. Cette étape, nécessaire dans certains cas, est inutile dans d'autres cas, comme les framboises, myrtilles, ...

Cette étape permet d'obtenir la pulpe. Pour les fruits ne nécessitant pas cette étape, le fruit constitue la pulpe.

On peut, pour améliorer le confort de consommation du produit final, procéder en outre à une découpe de la pulpe en petits morceaux, par exemple d'une dimension maximale de 1 cm. Là encore il s'agit d'une étape facultative.

Le produit obtenu sera appelé dans la suite la base de fruits.

On procède alors à l'ajout de sucre, avec des quantités similaires à celles utilisées dans les procédés classiques à cuisson de confitures, ces quantités étant différentes selon la nature des fruits utilisés, mais très bien connues de l'homme du métier et disponibles dans des livres de recettes. On obtient ce qui nous appellerons dans la suite, la masse sucrée.

On passe alors à l'étape de maintien à température et pression ambiante, au cours de laquelle se produit une évaporation naturelle.

Au cours de cette étape il n'y a d'aucun apport d'énergie, ni chauffage, ni refroidissement, ni montée en pression. S'il est vrai que quand le soleil brille, le processus se fait un peu plus vite, il se fait également très bien en l'absence de soleil et même s'il pleut pour peu que le produit soit abrité, c'est seulement un peu plus long.

Pour accélérer cette évaporation, tout en restant dans des conditions de température et pression ambiantes, on peut étaler la masse sucrée sur un plateau, pour augmenter la surface d'échange de la masse sucrée avec l'air ambiant. On peut disposer le plateau à l'extérieur de tout bâtiment, où le vent peut également produire un effet de ventilation, qui accélère également le processus. Il est utile de prévoir dans ce cas une moustiquaire disposée de sorte à protéger la masse sucrée des insectes, notamment des guêpes et abeilles.

On trouvera ci-après trois exemples de réalisation d'un procédé selon l'invention, où la température a toujours été inférieure à 25°C. D'autres essais ont montré que le résultat reste optimal, en terme de goût et taux de vitamine C résiduel dans le produit fini jusqu'à une température de 32°C. D'autres essais encore ont montré que jusqu'à une température n'excédant pas 50°C, l'amélioration du résultat par rapport à un procédé à cuisson reste significatif.

Le critère de fin de maintien pour évaporation naturelle est l'atteinte d'un taux de matière sèche prédéterminé, lequel doit être supérieur à 60%, de préférence au moins égal à 65%. Ce taux résiduel de matières sèches est quasi équivalent au taux résiduel de sucre, les matières sèches différentes du sucre étant présente en quantités très faibles.

Néanmoins il est utile de ne pas trop augmenter ce taux de matière sèche du produit fini, sinon la perception gustative se dégrade. Il est donc utile de réussir à descendre sous une activité de l'eau de 0,8 avec des taux de matière sèche pas trop supérieurs à 65%, et notamment ne dépassant pas 72%.

Un premier mode de réalisation permettant d'y arriver consiste à remplacer une grande part du saccharose par du fructose, en particulier d'utiliser au moins 50% de fructose par rapport à la masse totale de sucre ajoutée.

Un deuxième mode de réalisation consiste à acidifier la masse sucrée, par exemple en y ajoutant du concentré de citron, ce qui a pour effet de transformer une grande part du saccharose en fructose et glucose.

Pour certains fruits, comme la myrtille, on y arrive bien avec 100% de saccharose et aucun acidifiant.

Il est ainsi possible par des essais courants pour l'homme du métier, d'établir une abaque, indiquant, selon le fruit choisi, quel mélange de sucre il faut utiliser, s'il faut ajouter un acidifiant, et le taux de matières sèches cible à atteindre, pour garantir une activité de l'eau du produit fini inférieure à 0,8.

Selon un mode particulièrement intéressant de réalisation de la présente invention, l'opérateur surveille non pas le taux de matière sèche résiduel dans la masse sucrée, mais seulement son poids. Grâce à un calcul simple et très accessible à l'homme du métier, en mesurant le taux de matière sèche de la base de fruits, ou encore en le déduisant de la nature du fruit et de la méthode de préparation de la base de fruits, en connaissant la masse de la base de fruits et la masse de sucre ajouté, on obtient une masse cible pour le produit final, auquel suffisamment d'eau se sera évaporée pour obtenir un taux de matières sèches donné, par exemple 67%.

Pour réaliser le procédé selon l'invention, on peut donc avantageusement utiliser un dispositif comprenant une balance 1, par exemple précise au gramme près, un plateau 2, qui peut être un plateau en cuivre d'un mètre carré de surface sur lequel on peut étaler par exemple 8 kg de masse sucrée 3, le tout placé à l'extérieur pour profiter du vent, et à l'abri d'une moustiquaire 4 pour protéger le produit des insectes.

Les exemples ci-après ont été réalisés, et illustrent le procédé selon l'invention.

### Exemple 1

Quatre kg de clémentines pelées sont lavées, parées, coupées en petits quartiers, hachés dans un hachoir de 5mm de diamètre.

On ajoute 250g de concentré de citron à pH 1,9, puis 4,208 kg de sucre sous forme de fructose.

On obtient une masse sucrée, qu'on étale sur un plateau en cuivre de 1m2 de surface. Ce plateau est placé à l'extérieur sous moustiquaire et ventilation naturelle, à l'ombre.

Un calcul très accessible à l'homme du métier permet de définir la masse d'eau à évaporer pour atteindre un pourcentage de matières sèches de 69%.

Dans l'exemple cité, on a mesuré une quantité de matières sèches dans le fruit de 0,68 kg, ce qui permet de déterminer que la quantité d'eau à évacuer est de 1,374 kg, pour obtenir une masse de 7,1 kg de produit fini.

Plusieurs mesures ont permis de constater que
- après 3h45 d'évaporation en matinée, la masse sucrée était à un taux de matières sèches de 62%, et une activité de l'eau de 0,81,
- après 2h de plus en milieu de journée, la masse sucrée était à un taux de matières sèches de 64% et une activité de l'eau de 0,79,
- en fin de soirée, le taux de matières sèches était passé à 0,67%, et l'activité de l'eau à 0,75.

### Exemple 2

1,89 kg de myrtilles cueillies proprement, auxquels on ajoute 2,39 kg de sucre sous forme de saccharose permettent d'obtenir une masse sucrée de 4,28 kg, qu'on étale sur un plateau en cuivre de 1 m2 de surface. Ce plateau est placé à proximité d'un ventilateur.

Un calcul très accessible à l'homme du métier permet de définir la masse d'eau à évaporer pour atteindre un pourcentage de matières sèches de 69%.

Dans l'exemple cité, on a mesuré une quantité de matières sèches dans le fruit de 0,10 kg, ce qui permet de déterminer que la quantité d'eau à évacuer est de 0,38 kg, pour obtenir une masse de 3,9 kg de produit fini.

Après 8h d'évaporation naturelle, le pourcentage de matières sèches de 68% est atteint, et on obtient une activité de l'eau de 0,78.

Cet exemple montre que le procédé peut être mis en oeuvre sans fructose et sans acidifiant dans certains cas. La myrtille donne cette possibilité, de par ses caractéristiques propres.

### Exemple 3

2,475 kg de brisures de framboise décongelée, partiellement égouttée, donne une base de 2kg.

On ajoute 10g de concentré de citron à pH 1,9, puis 2 kg de sucre sous forme de fructose.

On obtient une masse sucrée, qu'on étale sur un plateau en cuivre de 1m2 de surface. Ce plateau est placé à proximité d'un ventilateur pour promouvoir l'évaporation.

Un calcul très accessible à l'homme du métier permet de définir la masse d'eau à évaporer pour atteindre un pourcentage de matières sèches de 69%.

Dans l'exemple cité, on a mesuré une quantité de matières sèches dans le fruit de 0,19 kg, ce qui permet de déterminer que la quantité d'eau à évacuer est de 0,736 kg, pour obtenir une masse de 3,2 kg de produit fini.

Plusieurs mesures ont permis de constater que
- après 4h15 d'évaporation, la masse sucrée était à un taux de matières sèches de 65%, et une activité de l'eau de 0,76,
- après 5h45, la masse sucrée était à un taux de matières sèches de 70% et une activité de l'eau de 0,72,
- après 6h45, les taux n'avaient plus bougé.

## Revendications

1. Procédé de préparation d'une conserve de fruits tartinable, en particulier une confiture, **caractérisé en ce qu'**il comporte les étapes suivantes :
- mélange d'une base de fruits avec une quantité prédéterminée de sucre, pour obtenir une masse sucrée,
- maintien de la masse sucrée à température et pression ambiantes de sorte à produire une évaporation d'une partie de l'eau contenue dans le mélange jusqu'à ce que la teneur résiduelle en matières sèches atteigne une valeur cible au moins égale à 60%.

2. Procédé selon la revendication précédente, dans laquelle l'étape de maintien est poursuivie jusqu'à l'obtention d'une activité de l'eau inférieure à 0,8.

3. Procédé selon l'une des revendications précédentes, dans lequel l'étape de maintien s'effectue à une température toujours inférieure à 45°C, et préférence à 32°C, de préférence à 25°C.

4. Procédé selon l'une des revendications précédentes, dans lequel la valeur cible de la teneur résiduelle en sucre est au moins égale à 65%.

5. Procédé selon l'une des revendications précédentes, dans lequel ledit sucre consiste au moins pour moitié en du fructose.

6. Procédé selon l'une des revendications 1 à 3, dans lequel, avant l'étape de mélange, on ajoute à la base de fruits un acidifiant, par exemple un concentré de citron, de sorte à abaisser le pH de la base de fruits en dessous de 3,5.

7. Procédé selon l'une des revendications précédentes, dans lequel on ajoute avant l'étape de mélange, les deux étapes suivantes :
- mesure du taux de matières sèches dans la base de fruits,
- détermination par calcul d'une valeur de masse cible du produit final, déduit dudit taux de matières sèches de la base de fruits et de la valeur cible du taux de matières sèches du produit final,
et dans lequel l'étape de maintien de la masse sucrée est poursuivie jusqu'à l'obtention de la valeur de la masse cible.

8. Dispositif spécialement conçu pour mettre en oeuvre un procédé selon la revendication 7, **caractérisé en ce qu'**il comporte un plateau (2) apte à recevoir une masse sucrée (3) étalée, une balance (1) apte à mesurer la masse de la masse sucrée, et un module logique apte à déclencher une alarme lorsque la valeur de la masse sucrée atteint une valeur cible.

9. Dispositif selon la revendication précédente, comprenant en outre une moustiquaire (4), disposée de sorte à protéger la masse sucrée des insectes.
